(19) Europäisches Patentamt
European Patent Office
Office européen des brevets

(11) Publication number: 0 035 341
B1

# (12) EUROPEAN PATENT SPECIFICATION

(45) Date of publication of patent specification: 09.05.84

(51) Int. Cl.[3]: C 08 L 27/06, C 08 L 27/24, C 08 L 33/00

(21) Application number: 81300631.9

(22) Date of filing: 17.02.81

## (54) Blending of vinyl chloride polymer and glutarimide polymer.

(30) Priority: 19.02.80 US 122170

(43) Date of publication of application: 09.09.81 Bulletin 81/36

(45) Publication of the grant of the patent: 09.05.84 Bulletin 84/19

(84) Designated Contracting States: BE CH DE FR GB IT LI NL SE

(56) References cited: None

(73) Proprietor: Rohm and Haas Company
Independence Mall West
Philadelphia, Pennsylvania 19105 (US)

(72) Inventor: Kopchik, Richard Michael
1335 Stephen Way
Southampton Pennsylvania, 18966 (US)

(74) Representative: Angell, David Whilton et al,
Rohm and Haas Company Patent Department
Chesterfield House Bloomsbury Way
London WC1A 2TP (GB)

EP 0 035 341 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Belgium Patent 848,486 discloses certain novel polyglutarimides which may be prepared by a novel process, these polyglutarimides having improved properties over previous polyglutarimides.

European Patent Application 13485 discloses improving the notched Izod impact strength and Gardner VHIT impact values of such polyglutarimides by blending them with polycarbonate and multiple stage polymers based on butadiene or acrylates.

While the invention of this Application succeeded in impact modifying the polyglutarimides, the incompatibility of polycarbonates with polyglutarimides interferes with the achievement of clear blends. Thus there remains a requirement for clear, high impact strength polyglutarimides.

On the other hand, clear, high impact strength vinyl chloride polymers (PVC) are known. They may be made by blending any of a wide variety of impact modifiers with the PVC. However it has always been an objective to obtain impact resistant PVC having improved heat distortion temperature. It has been very difficult to achieve significant increases in heat distortion temperature of impact modified vinyl chloride polymers so as to make them competitive with other engineering plastics.

This invention enables the provision of impact resistant polyglutarimides which can be made clear if desired and of impact resistant vinyl chloride polymers having attractive heat distortion temperatures.

This invention provides a composition comprising a blend of vinyl chloride polymer and a glutarimide polymer containing units, or mixtures of units of the structural formula

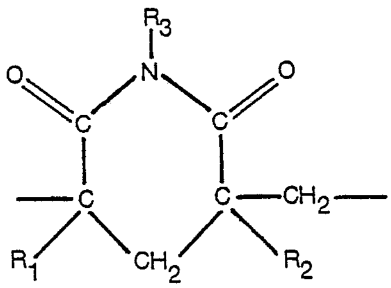

wherein

$R_1$, $R_2$, and $R_3$ may be the same or different and are hydrogen or $C_1$ to $C_{20}$ unsubstituted or substituted alkyl or aryl in a weight ratio of from 5:95 to 95:5.

The useful polyglutarimides include any known in the art, but those of Belgium Patent Specification 848486 have such attractive properties that they are greatly preferred.

The most preferred glutarimide polymers are those which have been measured from acrylic polymers such as poly(methylmethacrylate) and copolymers thereof by reaction in an extruder reactor in accordance with the Belgian Patent Specification with ammonia or a source of ammonia, or methyl amine so that 1 to 100% of the acrylic ester groups are imidized. The optimum results are obtained with degrees of imidization of 20 to 60%. The weight average molecular weights of the glutarimide polymers are typically 100,000 to 200,000. Such preferred glutarimide polymers contain units, or mixtures of units, of the structural formula:

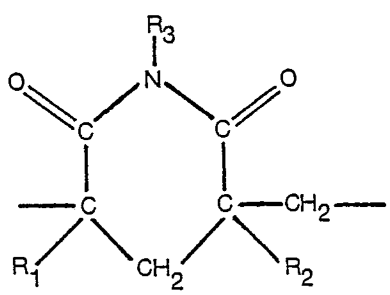

wherein

$R_1$, $R_2$ and $R_3$ are the same or different and are hydrogen or ($C_1$ to $C_{20}$)-unsubstituted or -substituted alkyl or aryl group(s). Other units derived from comonomers such as styrene, (meth)acrylic acid, acrylic acid, alkyl and cycloalkyl acrylates, and methacrylates other than methyl methacrylate, vinyl acetate and other ethylenically unsaturated compounds can also be present in the structure.

The vinyl chloride polymer can be poly(vinyl chloride), chlorinated polyvinyl chloride, or any polymer containing at least 50% by weight vinyl chloride units, for example poly(vinyl chloridevinyl acetate) or other known copolymer of vinyl chloride. The preferred vinyl chloride polymer is homopolyvinyl chloride (PVC). The weight ratio of the vinyl chloride polymer to the imide polymer is generally 5:95 to 95:5.

Preferably, the composition further includes an "impact modifier polymer". By this term is meant polymers useful for modifying the impact resistance of vinyl chloride polymer itself. When used,

suitable amounts of impact modifier polymer usually comprise 1 to 50% by weight of the blend of vinyl chloride polymer, polyglutarimide polymer, and impact modifier.

Frequently used PVC impact modifiers include butadiene or acrylic based multiple stage polymers, and ethylene-vinyl acetate and these are preferred in the present invention.

Preferred butadiene based multiple stage polymer include MBS (methacrylate-butadiene-styrene) types or an ABS (acrylonitrile-butadiene-styrene) types; for example, multiple stage polymers having a butadiene-styrene first stage, styrene second stage, and a methylmethacrylate-styrene final stage or an acrylonitrile-styrene final stage can be used.

An example of a suitable acrylic based multiple stage polymer has a crosslinked butyl acrylate first stage and a methyl methacrylate final stage.

Impact modifiers having both butadiene and acrylate as comonomers in a first stage, and a second stage derived from methacrylate, styrene or other similarly performed monomer are also suitable.

These impact modifiers usually, but not always, comprise rubbery core and hard shell stages. Ratios of rubber stage(s) to hard stage(s) are often from 1:1 to 9:1.

The composition may also include a heat stabilizer in an amount of 1 to 10 parts per 100 parts vinyl chloride polymer.

Preferred heat stabilizers comprise one or more of the following: organo tin compounds, organo lead compounds, and barium-cadmium compounds, and may be present in an amount of 4 to 8 parts per 100 parts by weight vinyl chloride polymer.

It is surprising that vinyl chloride polymers and glutarimide polymers are compatible. Compatibility of polymers with such widely different chemical structure is not usual and in this particular situation the fact that the two polymers are compatible leads to several possibilities.

First, the DTUFL, or heat distortion temperature, of the vinyl chloride polymer can be increased by the higher DTUFL glutarimide polymers.

Secondly we provide clear polymer blends without the refractive indices of the glutarimide polymer and the PVC polymer necessarily having been matched, which matching is often impossible, depending on the particular properties desired. The impact modifier polymer can be made to match the refractive index of the compatible blend of the vinyl chloride polymer and the glutarimide polymer, so that a clear ternary polymer blend can result. This compatibility is especially advantageous because it would be extremely difficult to match the refractive indices of three polymers such as the PVC, glutarimide polymer, and impact modifier polymer. This system of three components behaves as a two component system for purposes of refractive index matching.

Thirdly the blending of the vinyl chloride polymer with the glutarimide polymer surprisingly makes the glutarimide polymer more susceptible to impact modification, although the above mentioned European Patent Application achieved similar results with non-compatible polycarbonate blended with imides.

Some preferred embodiments of the invention are given in the following Examples for the purposes of illustration only.

In the following Examples, all parts and percentages are by weight unless otherwise indicated.

### Examples 1 to 3

Polyglutarimide prepared in accordance with Belgian Patent 848,486 and having a Vicat softening point of 169°C was used. First, the PVC was extruded with stabilizers and lubricants, as indicated in Table I, in a 2.54 cm (1 inch) Killion extruder using a moderate shear screw and sequential zone temperatures of 157.2°C (315°F), 171.1°C (340°F), 173.9°C (345°F) and 176.7°C (350°F) to form pellets. Then the appropriate powder blends of the polyglutarimides and an MBS multiple stage polymer, having a butadiene based first stage polymer, were extruded in a 2.54 cm (1 in.) Killion extruder using a moderate shear screw and sequential zone temperature of 165.6°C (330°F), 198.8°C (390°F) and 176.7°C (350°F) to form product. The product was injection moulded into test sample, bars having the composition and properties listed in Table III. This method of making product is referred to as a pellet blend.

In Example 1, 80 parts polyglutarimide and 20 parts PVC were blended using this method. The Vicat temperature, impact strength (notched Izod) and clarity were measured, and are reported in Table III. In Example 2, 30 parts polyglutarimide, 20 parts PVC, and 50 parts of the MBS multiple stage polymer were blended using this method, the same measurements were made, and the results reported in Table III. In Example 3, 40.10 parts polyglutarimide, 25.95 parts PVC, and 33.95 parts of the MBS polymer were blended using this method, and the results of the measurements reported in Table III.

TABLE I

Composition of a PVC Blend for Pellet Extrusion

| | Parts |
|---|---|
| Polyvinyl chloride, k value = 61 | 92.3 |
| Glycerol monostearate | 2.8 |
| Low molecular weight polyethylene butyl acrylate/styrene/methyl methacrylate copolymer processing aid | 0.9 |
| di-(methyl)bis-S,S'-tin(alkyl mercaptoacetate) | 3.7 |
| TOTAL | 100 |

Example 4

The procedure of Examples 1 to 3 was followed, except for using a ratio of 50% polyglutarimide, 13% PVC, and 37% MBS modifier a 6.35 cm $2\frac{1}{2}$ in) NRM extruder using a moderate compression screw and zone temperatures of 143,3/176,7/187,7/176,7/193,3/187,7°C (290/350/370/350/380/370°F). Before these polymers were blended the polyvinyl chloride was stabilized as indicated in Table II.

TABLE II

Composition of a PVC Blend for Powder Extrusion

| | |
|---|---|
| Polyvinyl chloride, k value = 61 | 90.5 |
| di-(methyl)bis-S,S'-bis(alkyl mercapto-acetate | 8.0 |
| glyceral monostearate | 2.5 |

The extrusion product was injection moulded into test bars having the composition and properties listed in Table III. This method of making product is referred to as a powder blend.

Example 5

The procedure of Example 4 was followed, except for using a different modifier which had a butyl acrylate, butylene diacrylate, diallyl maleate first stage (ratio 79.2/0.4/0.4) and a methyl methacrylate final stage (20 parts). The impact modifier was not matched in refractive index to the PVC/polyglutarimide blend, resulting in opaque ternary blends. The results are in Table III.

Example 6

The procedure of Example 5 was followed except for using a ratio of 25 parts polyglutarimide, 50 parts PVC, and 25 parts modifier. The results are in Table III.

Example 7

The same polyglutarimide as described in Example 1 and 2 is used. The polyglutarimide, polyvinyl chloride and multiple stage polymer having a partially acrylic first stage, are first mixed and then extruded in a 6.35 cm ($2\frac{1}{2}$") NRM extruder with zone temperatures of 185°C(365°F)/190.6°C(375°F)/210°C(410°F)/215.6°C(420°F)/187.8°C(370°F)/182.2°C(360°F) into strands and then pelletized. The pellets are then injection moulded into samples. The properties of these samples are given in Table III.

TABLE III

| | Composition | | | | | | |
|---|---|---|---|---|---|---|---|
| EX. NO. | % Glutarimide | % PVC | % Modifier | Method of Extrusion | Vicat Temp. °C | Notched Izod J/M (Ft-lbs/in) | Appearance |
| 1 | 80 | 20 | 0 | Pellet | 140 | 13.35(0.25) | Clear |
| 2 | 30 | 20 | 50 | Pellet | 122 | 544.68(10.2) | Clear |
| 3 | 40.10 | 29.95 | 33.95 | Pellet | 132 | 608.76(11.4) | Clear |
| 4 | 50 | 13 | 37 | Powder | 131 | 101.46 (1.9) | Clear |
| 5 | 50 | 13 | 37 | Powder | 136 | 149.52 (2.8) | Opaque |
| 6 | 25 | 50 | 25 | Powder | 81* | 961.2 (18.0) | Opaque |

*DTUFL measurement, 1.82 MPa (264 psi) ASTM D-648

Example 7

Example 1 was repeated except that the polyglutarimide used had a glass transition temperature of about 145°C, and the ratios of materials were varied as shown in Table IV.

TABLE IV

| | A | B | C | D |
|---|---|---|---|---|
| Polyglutarimide Tg = 145°C | 50 | 25 | 25 | 50 |
| PVC, K=61 | 50 | 25 | 50 | 25 |
| Glycerol monostearate | 1 | 1 | 1 | 1 |
| Butyltin mercaptide | 2 | 2 | 2 | 2 |
| MBS polymer | 0 | 50 | 25 | 25 |
| DTUFL, 1.82 MPa (264 psi) °C | 94 | 98 | 90 | 110 |
| Notched Izod J/M (ft. lb/in.) | 58.74 (1.1) | 582.06 (10.9) | 1041.3 (19.5) | 352.44 (6.6) |
| appearance | clear | clear | clear | clear |

Example 8

This example shows use of PVC, polyglutarimide, impact modifier formulations having very high PVC/glutarimide ratios, and demonstrates improvement of PVC thermal and mechanical properties using this invention.

To a PVC formulation containing the following ingredients were added the impact modifier shown in Example 5 and a methylene imide of polymethyl methacrylate as shown in Table V.

| | |
|---|---|
| PVC, k=69 | 100.0 |
| tin ester heat stabilizer | 1.6 |
| Calcium-stearate internal lubricant | 1.2 |
| Polyethylene wax external lubricant | 1.2 |
| acrylate-methacrylate copolymer processing aids | 1.4 |
| $TiO_2$ UV adsorber | 14.0 |

TABLE V

| | Total Formulation<br>Pt. by weight PVC Formulation. | Pts. by weight Modifier | Pts. by weight Polyimide (Vicat, °C) | DTUFL, °C At 1.82 MPa (264 psi) | ASTM Vicat (°C) | Cantilever sag cms (inches) at 90°C | Notched Izod J/M (ft. lbs.) at 23°C |
|---|---|---|---|---|---|---|---|
| A | 90 | 10 | 0 | 71.5 | 91 | 2136±0.15 (0.93±0.06) | 1148.1±128.16 (21.5±2.4) |
| B | 80 | 10 | 10(170) | 80.0 | 108 | 1.83±0.2 (0.72±0.08) | 598.08±64.08 (11.2±1.2) |
| C | 75 | 10 | 15(170) | 83.0 | 105 | — | 154.86±58.74 (2.9±1.1) |
| D | 80 | 10 | 10(140) | 78.5 | 96 | 1.52±0.13 (0.60±0.05) | 768.96±48.06 (14.4±0.9) |
| E | 75 | 10 | 15(140) | 82.0 | 100 | 1.07±0.13 (0.42±0.05) | 731.58±5.34 (13.7±0.1) |
| F | 70 | 10 | 20(140) | 86.0 | 103 | 0.48±0.03 (0.19±0.01) | 213.6±5.34 (4.0±0.1) |

**Claims**

1. A composition comprising a blend of vinyl chloride polymer and glutarimide polymer, the glutarimide polymer containing units, or mixtures of units, of the structural formula

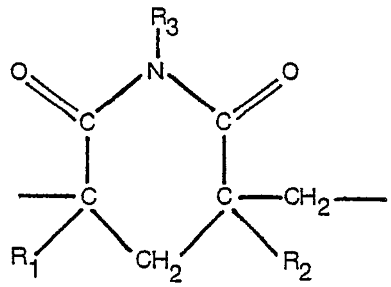

wherein

$R_1$, $R_2$, and $R_3$ may be the same or different and are hydrogen or unsubstituted or substituted $C_1$ to $C_{20}$ alkyl or aryl, in a weight ratio of from 5:95 to 95:5.

2. A composition as claimed in Claim 1 wherein the vinyl chloride polymer is poly(vinyl chloride), chlorinated poly(vinyl chloride), or poly(vinyl chloride-vinyl acetate).

3. A composition as claimed in Claim 1 or 2 wherein the glutarimide polymer is a homopolymer or copolymer in which the glutarimide units consist of units of the structural formula given in Claim 1.

4. A composition as claimed in any preceding claim wherein the glutarimide polymer is derived from a copolymer containing units of methyl methacrylate and one or more of the following: styrene, methacrylic acid, acrylic acid, alkyl and cycloalkyl acrylates and methacrylates other than methyl methacrylate.

5. A composition as claimed in any preceding claim further including a polymer useful as an impact modifier for the vinyl chloride polymer.

6. A composition as claimed in Claim 5 wherein the impact modifier comprises one or more methacrylate/butadiene/styrene, acrylonitrile/butadiene/styrene, acrylic-based multiple stage, acrylate/butadiene-based, and/or ethylene/vinyl acetate polymeric modifiers.

7. A composition as claimed in Claim 5 or 6 wherein the impact modifier is present in an amount of 1 to 50% by weight of the blend of vinyl chloride polymer, glutarimide polymer, and impact modifier.

8. A composition as claimed in any preceding claim further including a heat stabilizer in an amount of 1 to 10 parts per 100 parts vinyl chloride polymer.

9. A composition as claimed in Claim 8 wherein the heat stabilizer comprises one or more of the following: organo tin compounds, organo lead compounds, and barium-cadmium compounds.

10. A composition as claimed in Claim 8 or 9 wherein the heat stabilizer is present in an amount of 4 to 8 parts per 100 parts by weight vinyl chloride polymer.

**Patentansprüche**

1. Masse aus einer Mischung aus einem Vinylchloridpolymeren und einem Glutarimidpolymeren in einem Gewichtsverhältnis von 5:95 bis 95:5, wobei das Glutarimidpolymere Einheiten oder Mischungen von Einheiten der Formel

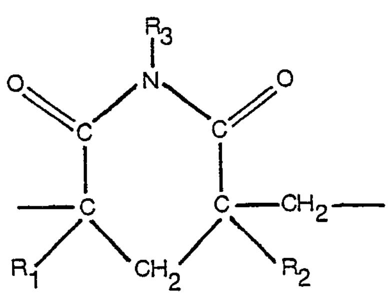

enthält, worin $R_1$, $R_2$ und $R_3$ gleich oder verschieden sind und für Wasserstoff oder nichtsubstituiertes oder substituiertes $C_1$—$C_{20}$-Alkyl oder -Aryl stehen.

2. Masse nach Anspruch 1, dadurch gekennzeichnet, daß das Vinylchloridpolymere aus Poly(vinylchlorid), chloriertem Poly(vinylchlorid) oder Poly(vinylchlorid-vinylacetat) besteht.

3. Masse nach Anspruch 1 oder 2, dadurch gekennzeichnet, daß das Glutarimidpolymere ein Homopolymeres oder Copolymeres ist, in dem die Glutarimideinheiten aus Einheiten der Strukturformel gemäß Anspruch 1 bestehen.

4. Masse nach einem der vorhergehenden Ansprüche, dadurch gekennzeichnet, daß das Glutarimidpolymere auf ein Copolymeres zurückgeht, das Einheiten von Methylmethacrylat sowie von einem oder mehreren der folgenden Substanzen enthält: Styrol, Methacrylsäure, Acrylsäure, Alkyl- und Cycloalkylacrylaten und -methacrylaten mit Ausnahme von Methylmethacrylat.

5. Masse nach einem der vorhergehenden Ansprüche, dadurch gekennzeichnet, daß sie ein Polymeres enthält, das als Schlagfestigkeitsmodifizierungsmittel für das Vinylchloridpolymere geeignet ist.

6. Masse nach Anspruch 5, dadurch gekennzeichnet, daß das Schlagfestigkeitsmodifizierungsmittel aus einem oder mehreren der folgenden Polymermodifizierungsmittel besteht: Methacrylat/Butadien/Styrol, Acrylnitril/Butadien/Styrol, einem Vielstufenpolymeren auf Acrylbasis, einem Polymeren auf Acrylat/Butadien-Basis und/oder einem Ethylen/Vinylacetat-Polymeren.

7. Masse nach Anspruch 5 oder 6, dadurch gekennzeichnet, daß das Schlagfestigkeitsmodifizierungsmittel in einer Menge von 1 bis 50 Gew.-%, bezogen auf die Mischung aus Vinylchloridpolymerem, Glutarimidpolymerem und Schlagfestigkeitsmodifizierungsmittel vorliegt.

8. Masse nach einem der vorhergehenden Ansprüche, dadurch gekennzeichnet, daß sie ein Wärmestabilisierungsmittel in einer Menge von 1 bis 10 Gew.-Teilen pro 100 Teile Vinylchloridpolymeres enthält.

9. Masse nach Anspruch 8, dadurch gekennzeichnet, daß das Wärmestabilisierungsmittel aus einem oder mehreren der folgenden Bestandteile besteht: Organozinnverbindungen, Organobleiverbindungen sowie Barium-Cadmium-Verbindungen.

10. Masse nach Anspruch 8 oder 9, dadurch gekennzeichnet, daß das Wärmestabilisierungsmittel in einer Menge von 4 bis 8 Teilen pro 100 Gew.-Teile Vinylchloridpolymeres vorliegt.

## Revendications

1. Une composition comprenant un mélange de polymère de chlorure de vinyle et de polymère de glutaramide, le polymère de glutarimide comprenant des motifs ou des mélanges de motifs de formule développée

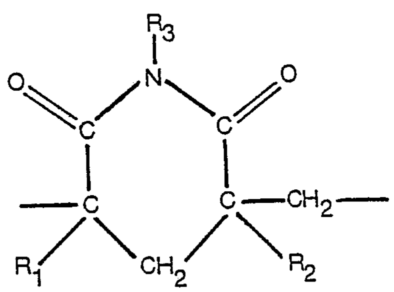

dans laquelle $R_1$, $R_2$ et $R_3$ peuvent être semblables ou différents et sont un hydrogène ou un aryle, ou un alcoyle non substitué ou substitué en $C_1$ à $C_{20}$, dans un rapport pondéral de 5/95 à 95/5.

2. Une composition comme revendiquée dans la revendication 1, dans laquelle le polymère de chlorure de vinyle est le poly(chlorure de vinyle), le poly(chlorure de vinyle) chloré ou le poly(chlorure de vinyle-acétate de vinyle).

3. Une composition comme revendiquée dans la revendication 1 ou 2, dans laquelle le polymère de glutarimide est un homopolymère ou copolymère dans lequel les motifs de glutarimide sont constitués de motifs ayant la formule développée indiquée dans la revendication 1.

4. Une composition comme revendiquée dans une quelconque revendication précédente, dans laquelle le polymère de glutarimide dérivé d'un copolymère contenant des motifs de méthacrylate de méthyle et un ou plusieurs des composés suivants:styrène, acide méthacrylique, acide acrylique, acrylate et méthacrylate d'alcoyle et de cycloalcoyle autres que le méthacrylate de méthyle.

5. Une composition comme revendiqué dans une quelconque revendication précédente, comprenant de plus un polymère utile comme modificateur de choc pour le polymère de chlorure de vinyle.

6. Une composition comme revendiquée dans la revendication 5, dans laquelle le modificateur de choc comprend un ou plusieurs modificateurs polymères de type méthacrylate/butadiène/styrène, acrylonitrile/butadiène/styrène, multiétagé à base acrylique/à base de butadiène et/ou éthylène/acétate de vinyle.

7. Une composition comme revendiquée dans la revendication 5 ou 6, dans laquelle le modificateur de choc est présent en une quantité de 1 à 50% en poids du mélange de polymère de chlorure de vinyle, de polymère de glutarimide et de modificateur de choc.

8. Une composition comme revendiquée dans une quelconque revendication précédente, comprenant de plus stabilisateur thermique en une quantité de 1 à 10 parties pour 100 parties de polymère de chlorure de vinyle.

9. Une composition comme revendiquée dans la revendication 8, dans laquelle le stabilisateur thermique comprend un ou plusieurs des composés suivants:composés organostanniques, composés organoplombiques et composés de baryumcadmium.

10. Une composition comme revendiquée dans la revendication 8 ou 9, dans laquelle le stabilisateur thermique est présent en une quantité de 4 à 8 parties pour 100 parties en poids de polymère de chlorure de vinyle.